# EUROPÄISCHE PATENTSCHRIFT

(11) **EP 4 163 526 B1**
(45) Veröffentlichungstag und Bekanntmachung des Hinweises auf die Patenterteilung: **01.05.2024**
(21) Anmeldenummer: 21201702.4
(22) Anmeldetag: 08.10.2021
(51) Int. Cl.: F16L 7/00, F23J 13/00

(54) **MANSCHETTENARTIGES BEFESTIGUNGSELEMENT SOWIE ZENTRIERELEMENT**
SLEEVE-LIKE FASTENING ELEMENT AND CENTERING ELEMENT
ÉLÉMENT DE FIXATION DE TYPE MANCHETTE, AINSI QU'ÉLÉMENT DE CENTRAGE

(43) Veröffentlichungstag der Anmeldung: 12.04.2023
(73) Patentinhaber: AS Technologie GmbH, 8595 Altnau (CH)
(72) Erfinder: BÄCHLE, Dieter, 8595 Altnau (CH)
(74) Vertreter: Patent- und Rechtsanwälte Behrmann Wagner PartG mbB

(56) Entgegenhaltungen:
- EP-A1- 3 742 032
- DE-A1-102013 104 041
- DE-U1- 9 205 720

## Beschreibung

Die vorliegende Erfindung betrifft ein manschettenartiges Befestigungselement zum umfangsseitigen Festspannen an einer Rohreinheit nach Anspruch 1. Ferner betrifft die vorliegende Erfindung ein Zentrierelement zum zentrischen Ausrichten einer Rohreinheit insbesondere eines Abgassystems einer Heizungsanlage in einem, insbesondere vertikal verlaufenden oder bereichsweise vertikal versetzten Schacht nach Anspruch 13. Aus dem Stand der Technik sind Befestigungselemente zum umfangsseitigen Anordnen an einer Mantelfläche einer Rohreinheit beispielsweise eines Abgassystems einer Heizungsanlage allgemein bekannt. Durch das Zusammenwirken mit separaten Zentriermitteln ermöglicht das Befestigungselement in der Ausgestaltung als ein Zentrierelement das zentrische Anordnen der Rohreinheiten, beispielsweise um Abgase eines Abgassystems einer Heizungsanlage abzuleiten. Die Zentrierelemente werden eingesetzt, um in Wohnbauten Rohreinheiten, die beispielsweise die Abluft einer Heizungsanlage an die Umgebung ableiten sollen, mit Abstand zum umfangsseitig bestehenden Schacht bis zum freien Ende des Schachts zu führen. Zum einen steht somit nahezu die gesamte Mantelfläche der Rohreinheit in Kontakt mit der Umgebungsluft, um eine optimale Kühlung der Rohreinheit zu erzielen. Zum anderen entsteht somit zwischen der Rohreinheit und dem Schacht ein ringförmiger Zwischenraum, um beispielsweise die Heizungsanlage mit Frischluft zu versorgen. Ein gattungsgemäßes Befestigungselement ist aus EP 3 742 032 A1 bekannt.

Ein Befestigungselement, das zum Zusammenwirken mit separaten Zentriermitteln eingerichtet ist und somit ein Zentrierelement bildet, ist von dem Anmelder bereits aus der EP 2 746 663 A2 bekannt. Das bekannte Befestigungselement umfasst ein aus einem Metallring ausgebildetes Grundelement mit vom Metallring aufnehmbaren und durch das Befestigungselement radial zur Rohreinheit ausrichtbaren Zentriermitteln. Über Festspannmittel lässt sich der Metallring umfangsseitig zur Rohreinheit Festspannen, wobei die Festspannmittel für eine stufenlose Anpassung des Metallrings an den Durchmesser der Rohreinheit eine Spannschraube aufweisen, die über ein Werkzeug soweit in ein Gewinde eindrehbar ist, dass der Metallring kraftschlüssig auf der Mantelfläche der Rohreinheit anliegt und somit dort spannbar ist. Durch das kraftschlüssige Anordnen des Metallrings werden die umfangsseitig verteilten Zentriermittel so radial zur Rohreinheit ausgerichtet, dass eine zentrische Positionierung der Rohreinheit innerhalb des Schachts ermöglicht wird.

Durch die nahezu unverwüstliche Ausgestaltung des bekannten Befestigungselements ist das Positionieren der Rohreinheit über die gesamte Lebensdauer der Heizungsanlage möglich. Allerdings führt die robuste Konstruktion des Zentrierelements zu hohen Materialkosten. Ferner ist beim Eindrehen der Spannschraube für das stufenlose Verstellen des Metallrings ein Werkzeug erforderlich, um das kraftschlüssige Anordnen des Befestigungselements bzw. des Zentrierelements an der Mantelfläche der Rohreinheit zu erzielen.

Daher liegt der vorliegenden Erfindung die Aufgabe zugrunde, ein manschettenartiges Befestigungselement anzugeben, das die aus dem Stand der Technik bekannten Nachteile überwindet. Insbesondere ist es Aufgabe der vorliegenden Erfindung ein Befestigungselement anzugeben, das sich kostengünstig herstellen lässt und neben einer stufenlosen Anpassung an den Durchmesser einer Rohreinheit insbesondere auch eine werkzeuglose Montage wie Demontage erlaubt. Ferner ist es Aufgabe der vorliegenden Erfindung ein entsprechendes Zentrierelement anzugeben.

Die Aufgabe für das Befestigungselement wird durch ein manschettenartiges Befestigungselement nach Anspruch 1 gelöst. Ferner wird die Aufgabe für ein Zentrierelement durch Anspruch 13 gelöst.

Vorteilhafte Weiterbildungen der Erfindung sind in den Unteransprüchen beschrieben.

Die vorliegende Erfindung bezieht sich auf ein manschettenartiges Befestigungselement zum umfangsseitigen Festspannen an einer Rohreinheit insbesondere eines Abgassystems einer Heizungsanlage, aufweisend ein in einem Grundzustand entlang einer Erstreckungsachse ausgebildetes bandförmiges Grundelement zum umfangsseitigen Anliegen an einer Mantelfläche der Rohreinheit in einem Festspannzustand, wobei das Grundelement insbesondere zur Aufnahme von als separate Bauteile ausgebildete Zentriermittel ausgebildet ist, die im Festspannzustand radial abragend zur Rohreinheit ausrichtbar sind, um die Rohreinheit innerhalb eines Schachts zentrisch anzuordnen. Ferner umfasst das erfindungsgemäße Befestigungselement Festspannmittel mit einer Arretiereinheit und Arretiermitteln, wobei die Arretiereinheit an einem ersten Ende des Grundelements angeordnet ist und die Arretiermittel wenigstens zwei auf dem Grundelement entlang der Erstreckungsachse zueinander benachbart ausgebildete Festspannpositionen ausbilden. Ferner sind die Festspannmittel gemäß der vorliegenden Erfindung so ausgebildet, dass die Arretiereinheit zum umfangsseitigen Festspannen des Grundelements an die Mantelfläche der Rohreinheit in einer der wenigstens zwei Festspannpositionen positionierbar ist. In diesem Zusammenhang ist erfindungsgemäß vorgesehen, dass das Grundelement zwischen der Arretiereinheit und den Arretiermitteln einen entlang einer Dehnungsstrecke elastisch verformbaren Federabschnitt zum kraftschlüssigen Festspannen des Grundelements um die Rohreinheit umfasst.

Das Grundelement weist die Form eines Bandes auf, umfasst eine Oberseite und eine gegenüberliegende Unterseite und erstreckt sich im Grundzustand entlang der Erstreckungsachse. Im Festspannzustand liegt die Unterseite auf der Mantelfläche der Rohreinheit auf, weshalb die Oberseite nach radial außen ausgerichtet wird. Das Grundelement ist im Rahmen der vorliegenden Erfindung aus einem Material mit solchen Materialeigenschaften realisiert, dass das Grundelement die Mantelfläche der Rohreinheit flexibel umschließen kann, jedoch in Bezug auf eine Kraftbeaufschlagung entlang der Längserstreckung des Grundelements formstabil ausgebildet ist. Anders ausgedrückt, das Grundelement ist derart biegsam, dass das Grundelement an die Mantelfläche der Rohreinheit anpassbar ist, wobei eine Dehnung der Länge des Grundelements bei einer längsgerichteten Kraftbeaufschlagung gering ausfällt.

Die Festspannmittel, die die Arretiereinheit und die Arretiermittel umfassen, ermöglichen, dass das Grundelement in einem Festspannzustand umfangsseitig zu der Rohreinheit festlegbar ist. Hierfür ist die Arretiereinheit an einem ersten Ende des Grundelements angeordnet und so ausgebildet, dass diese mit wenigstens zwei Festspannpositionen zusammenwirken kann, die von den Arretiermitteln zwischen dem ersten Ende und einem gegenüberliegenden zweiten Ende ausgebildet werden. Beim Festspannen der Arretiereinheit wird eine Kraft in das Grundelement eingebracht, wobei der erfindungsgemäße Federabschnitt entlang der Dehnungsstrecke verformt und/oder gedehnt wird, um somit die Längserstreckung des Grundelements zu verändern.

Der Federabschnitt ermöglicht somit eine stufenlose Anpassung der Längserstreckung des Grundelements an den Umfang der Rohreinheit, um neben der Grobeinstellung der Längserstreckung durch die Auswahl der ersten Festspannposition oder der wenigstens zweiten Festspannposition zusätzlich die Längserstreckung des Grundelements im Festspannzustand durch die Dehnungstrecke zu beeinflussen. Anders ausgedrückt, durch den erfindungsgemäßen Federabschnitt erfolgt eine Feineinstellung der Längserstreckung des Grund- und/oder Befestigungselements, wodurch ein kraftschlüssiges Anliegen des Befestigungselements umfangsseitig zur Rohreinheit erzielt werden kann. Ferner führt der Federabschnitt im Grundelement zu einer Rückstellkraft, die rundum zu einem gleichmäßigen Kraftschluss zwischen dem Befestigungselement und der Rohreinheit führt.

Anders ausgedrückt entsteht beim elastischen Verformen des Federabschnitts entlang der Dehnungsstrecke eine im Grundelement zwischen der Arretiereinheit und den Arretiermitteln wirkende Kraft, die das kraftschlüssige Festspannen des Befestigungselements umfangsseitig zur Rohreinheit ermöglicht.

Der Federabschnitt ist nur bereichsweise im Grundelement ausgebildet, wobei das Grundelement außerhalb des Federabschnitts lediglich geringe elastische Eigenschaften aufweist.

Vorteilhaft ermöglicht das erfindungsgemäße Befestigungselement eine werkzeuglose Montage wie Demontage, da zum Ausbilden des Festspannzustands die Arretiereinheit lediglich in eine der wenigstens zwei Festspannpositionen festgelegt werden muss. Vorteilhaft ist hierfür kein Werkzeug erforderlich, um etwa eine Schraube zu arretieren. Ferner ermöglicht das erfindungsgemäße Zusammenwirken zwischen dem zum elastischen Spannen ausgebildeten Federabschnitt und der Auswahl einer der wenigstens zwei Festspannpositionen, die entlang der Längserstreckung des Grundelements zueinander benachbart sind, eine stufenlose Anpassung des Befestigungselements an den Umfang der bestehenden Rohreinheit.

In einer bevorzugten Ausführungsform ist der Federabschnitt durch eine bogenförmige Erhebung des Grundelements ausgebildet, die insbesondere durch das Verstellen in einen flacheren Zustand die Dehnungsstrecke ausbildet. Anders ausgedrückt umfasst das Grundelement einen gekrümmten und/oder gewölbten Abschnitt, der Aufgrund der Biegefestigkeit des Grundelements eine Art Blattfeder ausbildet. Durch Kraftbeaufschlagung, also das Festspannen des Befestigungselements in den Festspannzustand, wird die bogenförmige Erhebung flacher, wodurch die Längserstreckung des Grundelements und/oder des Befestigungselements durch die Dehnungsstrecke vergrößert wird und gleichzeitig im Befestigungselement eine Rückstellkraft entsteht, die das kraftschlüssige Anliegen des Befestigungselements an der Mantelfläche der Rohreinheit ermöglicht. Vorteilhaft kann somit konstruktiv einfach und zuverlässig der Federabschnitt im Grundelement realisiert werden, um die Längserstreckung zwischen zwei benachbarten Festspannpositionen durch das Verstellen der bogenförmigen Erhebung in einen flacheren Zustand anzupassen. In einer Längsschnittansicht kann die bogenförmige Erhebung insbesondere auch als ein Teilkreisabschnitt bezeichnet werden, wobei durch die Geometrie und/oder Form und/oder Ausgestaltung der Erhebung eine Vorspannung im Grundelement erzeugbar ist.

Das Grundelement umfasst im Bereich der bogenförmigen Erhebung bevorzugt eine reduzierte Dicke. Ferner ist es bevorzugt, wenn das Grundelement unmittelbar benachbart zur bogenförmigen Erhebung ein Übergangsbereich umfasst, der eine Dicke aufweist, die zwischen der Materialdicke der bogenförmigen Erhebung und der Dicke des Grundelements liegt. Vorteilhaft führt dies zu einer besonders guten Vorspannung im Grundelement, die zu einem verbesserten Kraftschluss zwischen Befestigungselement und Rohreinheit führt.

Weiterbildend ist es vorgesehen, dass das Grundelement zusammen mit dem Federabschnitt und den Festspannmitteln monolithisch und/oder als Kunststoffspritzgussteil aus einem Kunststoffmaterial ausgebildet ist, wobei das Kunststoffmaterial insbesondere gegenüber in Längs- oder Umfangsrichtung wirkende Zugkräfte steife und/oder unflexible Materialeigenschaften aufweist.

Die monolithische Ausgestaltung führt zu einer besonders einfachen Herstellung, da das Grundelement, und somit auch das Befestigungselement, insbesondere durch ein entsprechendes Spritzgusswerkzeug herstellbar ist. Vorteilhaft sind somit keine weiteren Montageschritte zum Erzeugen des Befestigungselements erforderlich. Neben geringen Herstellungskosten führt dies auch zu einer geringen Fehlerrate bei der Produktion, da keine Montage zum Zusammenbau des Befestigungselements erforderlich ist.

Eine bevorzugte Ausführungsform sieht vor, dass die Arretiereinheit eine Ausnehmung zum Einführen eines dem ersten Ende gegenüberliegenden freien Endes des Grundelements sowie eine Arretiernase umfasst, derart, dass beim Einführen des freien Endes in die Ausnehmung die Arretiernase in einer der wenigstens zwei Festspannpositionen der Arretiermittel festlegbar ist.

Das freie Ende ist somit das zweite Ende des bandförmigen Grundelements, das gegenüberliegend zu der Arretiereinheit angeordnet ist.

Unter Ausnehmung wird vorliegend eine Materialaussparung, insbesondere ein Loch und/oder eine Öffnung, verstanden, die die Aufnahme des freien Endes des Grundelements ermöglicht, um somit aus dem bandförmigen Grundelement ein ringförmiges Grundelement auszubilden. Durch die Ausnehmung erfolgt eine Ausrichtung und/oder Positionierung der Arretiermittel, die das Grundelement zwischen dem ersten Ende und dem freien Ende umfasst. Die Arretiernase ist ein Bestandteil der Arretiereinheit, die in Eingriff mit den Arretiermitteln bringbar ist, und somit in einer der von den Arretiermitteln ausgebildeten Festspannpositionen festgelegt werden kann. Hierbei ist die Arretiernase so relativ zur Ausnehmung angeordnet und/oder ausgerichtet, dass die Arretiermittel nach dem Einführen des freien Endes durch die Arretiernase mechanisch kontaktierbar sind, um somit die Arretiernase in einer der Festspannpositionen, die von den Arretiermitteln ausgebildet werden, festzulegen.

Durch die Schlichtheit der mit der Arretiernase zusammenwirkenden Ausnehmung kann der Festspannzustand auch von ungeschulten Hilfspersonal erzeugt werden, da eine Fehlbedienung nahezu ausgeschlossen werden kann. Ferner lässt sich durch das bloße Einführen des freien Endes und das anschließende Einbringen einer Kraft in das Grundelement werkzeuglos eine Auswahl zwischen einer der wenigstens zwei Festspannpositionen realisieren. Zusätzlich wird neben der Auswahl einer der Festspannpositionen durch die eingebrachte Kraft auch der Federabschnitt kraftbeaufschlagt. Vorteilhaft kann somit durch die vorliegende Ausgestaltung die werkzeuglose Montage wie Demontage zusätzlich vereinfacht werden.

Weiterbildend ist es in diesem Zusammenhang zudem vorgesehen, dass die Arretiernase eine Angriffsfläche zum Lösen der Festspannpositionen durch einen, insbesondere manuellen, Krafteintrag umfasst. Die Angriffsfläche ermöglicht somit die Festspannmittel lösbar auszugestalten, um beispielsweise bei Wartungs- oder Reparaturarbeiten den Festspannzustand des Befestigungselements wieder zu lösen und somit eine Zerstörung des Befestigungselements durch das Servicepersonal zu vermeiden. Bevorzugt ist die Angriffsfläche so ausgebildet, dass manuell, beispielsweise durch die Fingerkuppe der Hand von Servicepersonal, die Arretiernase aus der Festspannposition gelöst werden kann, um dann das freie Ende wieder aus der Ausnehmung herauszuziehen.

Ferner umfasst eine weiter bevorzugte Ausgestaltung, dass die Arretiermittel im Grundelement abschnittsweise ausgebildet sind und/oder dass die Arretiermittel in einem ersten Arretiermittelabschnitt und/oder einem zweiten Arretiermittelabschnitt und/oder einem dritten Arretiermittelabschnitt und/oder wenigstens einem vierten Arretiermittelabschnitt ausgebildet sind, die insbesondere im Grundelement entlang der Erstreckungsachse zueinander beabstandet ausgebildet sind. Vorteilhaft führt dies zu einem universell einsetzbaren Befestigungselement, das an Rohreinheiten mit unterschiedlichen Durchmessern festgelegt werden kann. Vorteilhaft kann somit auch bei einer bereichsweisen Verjüngung der Rohreinheit auf das gleiche Befestigungselement zurückgegriffen werden. Ferner wird zusätzlich der Aufwand bei der Produktion und/oder Lagerung und/oder Transport reduziert.

Das Befestigungselement ist bei einer solchen Weiterbildung zunächst durch die Auswahl eines der Arretiermittelabschnitte an den Durchmesser der Rohreinheit anpassbar. Weiterhin kann durch die Wahl einer der wenigstens zwei Festspannpositionen dann zusätzlich das Befestigungselement an den Durchmesser der Rohreinheit angepasst werden, um beispielsweise eine auf der Mantelfläche der Rohreinheit zusätzlich ausgebildete Ummantelung auszugleichen. Schließlich erfolgt dann durch die Dehnungsstrecke des erfindungsgemäßen Federabschnitts eine weitere Anpassung an die Durchmesser, die als Feinjustierung des Befestigungselements bezeichnet werden kann.

Zudem umfasst eine bevorzugte Ausgestaltung, dass die Arretiermittel eine Vielzahl von im Wesentlichen sägezahnförmigen Raststufen zum Ausbilden der wenigstens zwei Festspannpositionen umfasst. Vorteilhaft können die sägezahnförmigen Raststufen bevorzugt mit der Arretiernase so zusammenwirken, dass im Bereich der Arretiermittelabschnitte eine Vielzahl an Vorspannpositionen ausbildbar sind, wobei dann die Längserstreckung des Befestigungselements zusätzlich durch die vom Federelement ausgebildete Dehnungsstrecke ergänzt wird, um stets eine kraftschlüssige, insbesondere stufenlose Anpassung des Befestigungselements an die Rohreinheit zu erzielen.

In einer bevorzugten Ausführungsform umfassen die Arretiermittel eine Vielzahl von im Wesentlichen sägezahnförmigen Raststufen zum Ausbilden der wenigstens zwei Festspannpositionen. Unter einem sägezahnförmigen Verlauf der Raststufen wird verstanden, dass in einer Längsschnittansicht die Arretiermittel einen senkrecht ansteigenden Abschnitt aufweisen, der vorliegend als Krafteintragsfläche bezeichnet wird, da dieser insbesondere mit der Arretiernase zum Realisieren des Festspannzustands zusammenwirkt. Der senkrecht ansteigende Abschnitt geht dann in einen abfallenden, insbesondere gleichmäßig und/oder linear abfallenden Abschnitt über, wobei sich diese beiden Abschnitte entlang der Ersteckungsachse periodisch wiederholen.

Weiterbildend kann der zackenförmige Verlauf der Raststufen, der sich mehrfach entlang der Erstreckungsachse wiederholt, auch zusätzlich einen Dachabschnitt und einen Bodenabschnitt aufweisen, die beide in der o.g. Längsschnittansicht horizontal und somit parallel zur Oberseite des Grundelements ausgerichtet sind. Der Dachabschnitt und der Bodenabschnitt sind abwechselnd zwischen dem senkrecht oder vertikal ansteigenden Abschnitt und dem abfallenden Abschnitt angeordnet. Entlang der Erstreckungsachse verbindet der Dachabschnitt somit die im Wesentlichen senkrecht zur Oberseite ausgerichtete Krafteintragsfläche mit dem abfallenden Abschnitt, der vorliegend auch als Steigungsabschnitt bezeichnet wird. Ferner verbindet der Bodenabschnitt entlang der Erstreckungsachse den Steigungsabschnitt mit der Krafteintragsfläche.

Vorteilhaft kann durch die Vielzahl dieser sägezahnförmigen Abschnitte eine Vielzahl von Raststufen realisiert werden, die jeweils eine Vorspannposition ausbilden, in der insbesondere die Arretiernase festlegbar ist. Die Raststufen sind in diesem Zusammenhang in der Oberseite des Grundelements ausgebildet und werden bevorzugt vom Grundelement selbst gebildet, weshalb eine Fertigung insbesondere durch ein Spritzgussverfahren, insbesondere im Zusammenhang mit der bereits erwähnten monolithischen Ausgestaltung des Grundelements, technisch einfach umsetzbar ist.

In einer bevorzugten Ausführungsform ist das Grundelement derart ausgestaltet, dass es wenigstens eine bezüglich der Breitenerstreckung des Grundelements mittig angeordnete schlitzförmige Materialaussparung aufweist. Die Materialaussparung ist im Grundzustand abschnittsweise entlang der Erstreckungsachse im Grundelement ausgebildet, wobei das Grundelement auch mehrerer solcher Materialaussparungen aufweisen kann. Weiter bevorzugt ist es in diesem Zusammenhang, wenn eine Materialaussparung benachbart zu einem der wenigstens vier Arretiermittelabschnitte im Grundelement angeordnet ist. Durch die Materialaussparung bildet das Grundelement randseitig zwei parallele Längsstege aus. Vorteilhaft führen die beiden randseitigen Längsstege im Festspannzustand an einer insbesondere vertikal verlaufenden Rohreinheit zu einer Verbesserung der Haftreibung zwischen Befestigungselement und Rohreinheit, da es zu einem festklemmen und/oder verkeilen der Längsstege kommt. Hierdurch ist vorteilhaft eine zusätzliche Stabilisierung des Befestigungselements in dem Festspannzustandmöglich, ohne dass spezielle Materialien mit guter Haftreibung eingesetzt werden müssen. Somit erweitert auch diese konstruktive Ausgestaltung die erfinderische Idee eines kostengünstig herstellbaren Befestigungselements, das insbesondere als monolithisches Bauteil durch ein einziges Spritzgussverfahren herstellbar ist.

In einer bevorzugten Ausführungsform weist das Grundelement bezüglich seiner Breitenerstreckung eine Verjüngung auf, um eine Solltrennstelle zum Anpassen der Längserstreckung des Grundelements im Festspannzustand auszubilden. Vorteilhaft sieht die Erfindung bevorzugt vor, dass eine derartige Solltrennstelle mit einer Vielzahl von Arretiermittelabschnitten kombiniert wird, um ein universell einsetzbares Befestigungselement auszubilden, das umfangsseitig zu unterschiedlich dicken Rohreinheiten angeordnet werden kann, wobei dann überstehende Endabschnitte des Grundelements abtrennbar sind. Vorteilhaft wird durch die Verjüngung für Servicepersonal sichtbar, in welchem Bereich das Abtrennen erfolgen kann, ohne das Befestigungselement negativ zu beeinflussen.

In einer weiteren bevorzugten Ausführungsform umfasst das Grundelement eine Öse zum Eingriff eines Werkzeugs. Vorteilhaft ermöglicht die Öse, dass die Kraft zum Festspannen des Befestigungselements durch das Werkzeug in das Grundelement eingebracht werden kann. Dies ermöglicht eine weitere Vereinfachung der Montage des Befestigungselements, da auch der Federabschnitt entlang der Dehnungsstrecke mittelbar über das Werkzeug kraftbeaufschlagbar ist.

Unter einer Öse werden im Rahmen der vorliegenden Erfindung eine Materialaussparung und/oder ein bereitgestellter Koppelabschnitt, insbesondere ein vom Grundelement umfasstes Koppelelement verstanden, das zum Zusammenwirken mit einem Werkzeug ausgebildet ist. Hierbei ist es vorgesehen, dass die Kraft in das Werkzeug entweder manuell durch eine Bedienperson oder maschinell durch eine Handhabungsvorrichtung einbringbar ist.

In einer weiterbildenden Ausführungsform umfasst das Grundelement bereichsweise einen Griffabschnitt. Der Griffabschnitt ist bevorzugt im Bereich des freien Endes, insbesondere in einem dem freien Ende zugeordneten Endabschnitt, angeordnet, um eine Kraft unabhängig von dem für das Festspannen gewählten Arretiermittelabschnitt in das Grundelement einzubringen, um eine passende Festspannposition zu wählen und den Federabschnitt entlang der Dehnungsstrecke zu verformen. Vorteilhaft ergänzt diese konstruktive Ausgestaltung die werkzeuglose Montage des Befestigungselements, da die Haftreibung beim manuellen Greifen des Grundelements verbessert werden kann. Weiterhin ist eine solche konstruktive Ausgestaltung auch einfach im Zusammenhang mit der bevorzugten monolithischen Ausbildung des Grundelements kombinierbar.

In diesem Zusammenhang ist es zudem weiterbildend im Rahmen der vorliegenden Erfindung vorgesehen, dass das Grundelement eine im Festspannzustand nach außen, insbesondere bezüglich der Rohreinheit eine nach radial außen, ausrichtbare Oberseite und eine der Oberseite gegenüberliegende, im Festspannzustand an der Mantelfläche der Rohreinheit aufliegende und somit nach innen ausgerichtete Unterseite umfasst, wobei die Oberseite die Vielzahl der sägezahnförmigen Raststufen umfasst und/oder der Griffabschnitt eine auf der Oberseite und der Unterseite ausgebildete Vielzahl von Griffrillen aufweist.

Die Unterseite des Grundelements liegt im Festspannzustand auf der Mantelfläche der Rohreinheit auf. Sie ist somit bezüglich der Rohreinheit nach radial innen ausgerichtet. Die gegenüberliegende Oberseite des Grundelements ist im Festspannzustand radial nach außen ausgerichtet. Vorteilhaft ist die Vielzahl der sägezahnförmigen Raststufen nur auf der Oberseite ausgebildet, um das gleichmäßige umfangsseitige Anliegen des Grundelements an die Mantelfläche der Rohreinheit zu ermöglichen und einen guten Reibschluss zu erzielen. Dagegen ist der Griffabschnitt durch die Griffrillen auf der Oberseite und auf der Unterseite des Grundelements ausgebildet, um somit das Einbringen einer Kraft mit der Hand in das Grundelement durch eine höhere Haftreibung zu verbessern.

Ferner ist im Rahmen der vorliegenden Erfindung auch ein Zentrierelement zum zentrischen Ausrichten einer Rohreinheit insbesondere eines Abgassystems einer Heizungsanlage in einem, bevorzugt vertikal verlaufenden weiter bevorzugt bereichsweise vertikal versetzten Schacht vorgesehen, wobei das Zentrierelement neben einem erfindungsgemäßen Befestigungselement zusätzlich Zentriermittel aufweist, die durch wenigstens ein separates Bauteil ausgebildet sind, um somit die Rohreinheit in dem festgelegten Zustand des Befestigungselements innerhalb des Schachts durch ein gleichmäßiges Beabstanden der Rohreinheit von den Innenwänden des Schachts zentrisch auszurichten.

Vorteilhaft kann im Rahmen der vorliegenden Erfindung die Rohreinheit eine unterschiedliche Geometrie aufweisen. Neben einer runden Grundfläche mit einem inneren Durchmesser und/oder einer Nennweite von insbesondere 60mm, 80mm, 100mm oder 110mm ist auch eine sich, insbesondere bereichsweise radial verjüngende und/oder aufweitende Ausgestaltung der Rohreinheit umfasst, wobei das erfindungsgemäße Zentrierelement mit sämtlichen Ausführungsformen in Wirkverbindung stehen kann.

Ferner sind auch unterschiedliche Ausführungen eines Schachts mitumfasst. Neben einer rechteckigen oder quadratischen Grundfläche kann der Schacht auch eine runde Grundfläche aufweisen. Weiterhin kann der Schacht neben einer rein vertikalen Ausrichtung auch einen gekrümmten und/oder geknickten und/oder insbesondere abschnittsweise winklig zur Vertikalachse ausgerichteten geradlinigen und/oder schrägen Abschnitt aufweisen, um somit insbesondere einen abschnittsweise vertikal versetzten Schacht auszubilden.

Unter den Zentriermitteln wird somit wenigstens ein separates Bauteil verstanden, das aus einem oder mehreren Komponenten bestehen kann. In einer bevorzugten Ausführungsform umfassen die Zentriermittel ein Schlittenelement sowie einen Ringabschnitt. Das Schlittenelement umfasst Festlegmittel, um das Schlittenelement mechanisch an dem Befestigungselement anzuordnen. Insbesondere sind die Festlegmittel durch eine Aufnahme zum Einführen des freien Endes ausgebildet, wobei das Schlittenelement entlang des Grundelements beliebig positionierbar ist. Ferner ist das Schlittenelement bevorzugt mit dem Ringabschnitt mechanisch gekoppelt, der im Festspannzustand des Befestigungselements bezüglich der Rohreinheit radial abragend ausgerichtet ist. Der Ringabschnitt ist bevorzugt aus einem Kunststoffmaterial ausgebildet, der bezüglich seiner Radialerstreckung flexibel ausgebildet ist. Somit kann die Rohreinheit zwischen wenigstens zwei Ringabschnitten innerhalb des Schachts ausgerichtet werden.

Weitere Vorteile, Merkmale und Einzelheiten der Erfindung ergeben sich aus den nachfolgenden Beschreibungen bevorzugter Ausführungsbeispiele sowie anhand der Zeichnungen.

Diese zeigen in
- Fig. 1a bis Fig. 1c:: eine Draufsicht, eine Seitenansicht und eine Ansicht von unten eines erfindungsgemäßen Befestigungselements im Grundzustand gemäß einer ersten bevorzugten Ausgestaltung;
- Fig. 2a und Fig. 2b:: eine seitliche Schnittansicht und eine Draufsicht einer Arretiereinheit gemäß der ersten bevorzugten Ausgestaltung jeweils im vergrößerten Maßstab;
- Fig. 3a und Fig. 3b:: eine seitliche Schnittansicht und ein vergrößerter Teilausschnitt der seitlichen Schnittansicht der Arretiermittel gemäß der ersten bevorzugten Ausführungsform;
- Fig. 4:: eine seitliche Schnittansicht des bereits bekannten Grundelements im Bereich des freien Endes mit einem Griffabschnitt gemäß der ersten bevorzugten Ausführungsform;
- Fig. 5a bis Fig. 5d:: eine perspektivische Ansicht, eine Seitenansicht, eine Draufsicht und eine Ansicht von vorne eines Zentrierelements gemäß einer bevorzugten Ausführungsform im Grundzustand;
- Fig. 6a bis Fig. 6c:: eine perspektivische Ansicht, eine Seitenansicht und eine Draufsicht des Zentrierelements gemäß der bevorzugten Ausführungsform im Festspannzustand;
- Fig. 7a bis Fig. 7c:: eine Querschnittansicht von möglichen Schächten und
- Fig. 8a und Fig. 8b:: eine Längsschnittansicht möglicher Schachterstreckungen.

Gleiche Elemente bzw. Elemente mit gleicher Funktion sind in den Figuren mit den gleichen Bezugsziffern versehen.

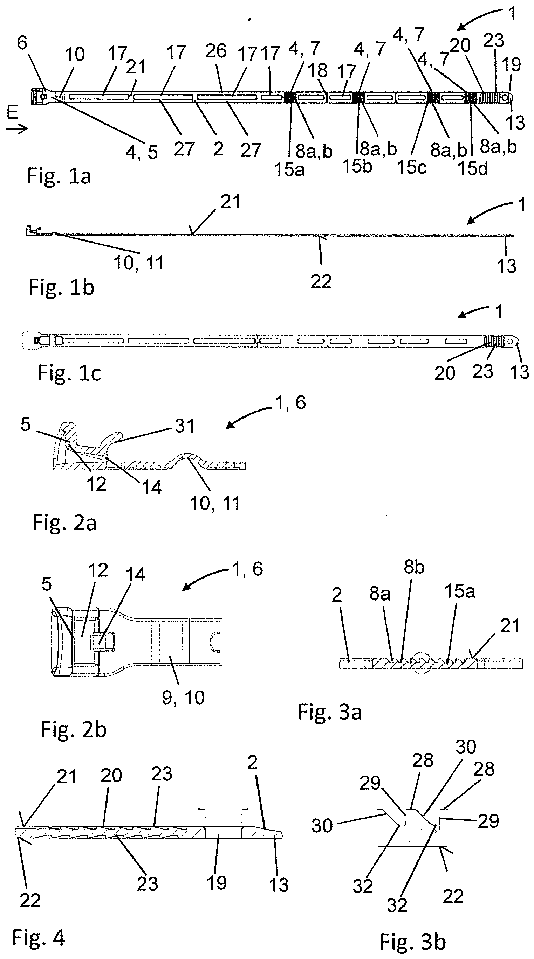

Die Fig. 1a zeigt die Draufsicht eines manschettenartigen Befestigungselements 1 in einem Grundzustand 102 gemäß einer ersten bevorzugten Ausführungsform. Das Befestigungselement 1 umfasst ein Grundelement 2, das bandförmig ausgebildet ist und sich in dem figürlich dargestellten Grundzustand von einem ersten Ende 6 ausgehend entlang der Erstreckungsachse E zu einem gegenüberliegenden freien Ende 13 erstreckt.

Am ersten Ende 6 umfasst das Grundelement 2 eine Arretiereinheit 5, die zusammen mit Arretiermitteln 7 Festspannmittel 4 ausbilden. Die Arretiermittel 7 sind im Grundelement 2 entlang der Erstreckungsachse E ausgebildet. Die Arretiermittel 7 umfassen wenigstens zwei auf dem Grundelement 2 entlang der Erstreckungsachse E zueinander benachbart ausgebildete Festspannpositionen 8a, 8b. Ferner sind die Festspannmittel 4 so ausgebildet, dass die Arretiereinheit 5 zum umfangsseitigen Festspannen des Grundelements 2 an die Mantelfläche der Rohreinheit 100 in einer der wenigstens zwei Festspannpositionen 8a, 8b festlegbar ist, um einen Festspannzustand 101 des Befestigungselements 1 zu realisieren.

In der vorliegenden Ausführungsform sind die Arretiermittel 7 im Grundelement 2 abschnittsweise ausgebildet. Hierbei umfassen die Arretiermittel 7 einem ersten Arretiermittelabschnitt 15a, einen zweiten Arretiermittelabschnitt 15b, einen dritten Arretiermittelabschnitt 15c sowie einen vierten Arretiermittelabschnitt 15d, die jeweils wenigstens zwei Festspannpositionen 8a, 8b zum Festspannen der Arretiereinheit 5 im Festspannzustand 101 ausbilden.

Für ein kraftschlüssiges Anliegen des Befestigungselements 1 um eine Rohreinheit 100 in dem Festspannzustand 101 umfasst das Grundelement 2 einen Federabschnitt 10, der entlang einer Dehnungsstrecke, die im Grundzustand 102 in Richtung der Erstreckungsachse E verläuft, elastisch verformbar ist. Der als ein elastischer Puffer- und/oder Dehnungsabschnitt wirkende Federabschnitt 10 ist unmittelbar benachbart zum ersten Ende 6 und somit zu der Arretiereinheit 5 im Grundelement 2 angeordnet. Der Federabschnitt 10 führt zu einer Anpassung der Längserstreckung des Grundelements 2 im Festspannzustand 101, um neben der Auswahl einer der wenigstens zwei Festspannpositionen 8a, 8b der vier Arretiermittelabschnitte 15a-d eine Feinjustierung der Längserstreckung des Befestigungselements 1 zu realisieren. Vorteilhaft ermöglich dies das kraftschlüssige Festspannen des Befestigungselements 1 an die Mantelfläche einer Rohreinheit 100 in dem später noch näher erläuterten Festspannzustand.

Weiterhin geht aus der Draufsicht hervor, dass das Grundelement 2 mehrere schlitzförmige Materialaussparungen 17 umfasst, die entlang der Erstreckungsachse E ausgerichtet sind und zur Ausbildung von zwei randseitigen, in bestimmten Bereichen zueinander parallel verlaufenden Längsstegen 26, 27 führen. Vorteilhaft kann durch die randseitigen Längsstege 26, 27 das Festspannen des Befestigungselements 1 um eine vertikal verlaufende Rohreinheit 100 verbessert werden, da durch das Verkeilen der bereichsweise ausgebildeten Längsstege 26, 27 eine verbesserte Haftwirkung erzielt werden kann. Somit kann das Abgleiten des Befestigungselements 1 auf der Rohreinheit 100 aufgrund der einwirkenden Gewichtskraft verhindert werden.

Weiterhin umfasst das Grundelement 2 Solltrennstellen 18, die durch eine Verjüngung der Breitenerstreckung des Grundelements 2 ausgebildet sind und somit durch das Abtrennen des freien Endes 13 eine Anpassung der Längserstreckung des Grundelements 2, insbesondere im Festspannzustand 101 erlauben.

Am freien Ende 13 umfasst das Grundelement 2 eine Öse 19, die dazu ausgebildet ist ein Werkzeug aufzunehmen. Durch die Öse 19 kann mittelbar über das Werkzeug somit eine manuelle oder motorische Kraft in das Befestigungselement 1 eingebracht werden, um den Festspannzustand 101 zu realisieren. Zusätzlich, insbesondere um die werkzeuglose Montage zu vereinfachen, umfasst das Grundelement 2 einen Griffabschnitt 20, der durch eine bereichsweise Ausbildung von Griffrillen 23 realisiert ist. Die Griffrillen führen zu einer verbesserten Haftwirkung beim manuellen Greifen und sind in der Oberseite 21 und der Unterseite 22 des Grundelements 2 ausgebildet.

Die in der Fig. 1b gezeigte Seitenansicht des Grundelements 2 zeigt den erfindungsgemäßen Federabschnitt 10, der vorliegend durch eine bogenförmige Erhebung 11 ausgebildet ist. Bei einer Kraftbeaufschlagung wird die bogenförmige Erhebung 11 flacher, wodurch zum einen die Längserstreckung des Grundelements 2 durch die Dehnungsstrecke beeinflusst wird und zum anderen eine Rückstellkraft innerhalb des Grundelements 2 erzeugt wird, die im Festspannzustand 101 das kraftschlüssige Anliegen des Befestigungselements 1 an die Mantelfläche der Rohreinheit 100 ermöglicht.

Des Weiteren zeigt die Fig. 1c die Unterseite 22 des Grundelements 2, die im Festspannzustand 101 auf der Mantelfläche der zu zentrierenden Rohreinheit 100 anliegt. Es wird deutlich, dass die Unterseite 22 lediglich im Griffabschnitt 20 die Vielzahl von Griffrillen 23 umfasst, die im Bereich des freien Endes 13 im Grundelement 2 ausgebildet sind.

Die Fig. 2a zeigt eine seitliche Schnittansicht des Grundelements 2 im Bereich des ersten Endes 6. Wie bereits erwähnt, umfasst das Grundelement 2 in diesem Bereich die Arretiereinheit 5 sowie den Federabschnitt 10, die im Grundelement 2 unmittelbar zueinander benachbart angeordnet sind und vorliegend grafisch vergrößert dargestellt sind.

Die Arretiereinheit 5 umfasst eine Ausnehmung 12, die zur Aufnahme des freien Endes 13 des Grundelements 2 ausgebildet ist. Beim Einführen des freien Endes 13 in die Ausnehmung 12 tritt die Arretiereinheit 5 in Wirckontakt mit einem der vier Arretiermittelabschnitte 15a-d, weshalb das Herausziehen des freien Endes 13 aus der Ausnehmung 12 nicht mehr möglich ist. Lediglich das weitere Einführen des freien Endes 13 in die Ausnehmung 12 ist möglich, um von einer ersten Festspannposition 8a in wenigstens eine zweite Festspannposition 8b zu wechseln, falls dies durch den Durchmesser der Rohreinheit 100 nicht verhindert wird.

Weiterhin umfasst die Arretiereinheit 5 eine bereichsweise in die Ausnehmung 12 hineinragende Arretiernase 14, die in eine der wenigstens zwei Festspannpositionen 8a, 8b festlegbar ist. Um neben der werkzeuglosen Montage auch eine werkzeuglose Demontage des Befestigungselements 1 zu ermöglichen, umfasst die Arretiernase 14 eine Angriffsfläche 31, die das Lösen der Arretiernase 14 aus der Festspannposition, in der diese festgelegt ist, ermöglicht. Hierfür muss eine Kraft zum elastischen Verformen der Arretiernase 14 in die Angriffsfläche 31 so eingebracht werden, dass die Arretiernase 14 so verformt wird, dass diese aus der Festspannposition 8a, 8b gelöst wird.

Zudem ist der erfindungsgemäße Federabschnitt 10 figürlich dargestellt, der durch eine bereichsweise ausgebildete bogenförmige Erhebung 11 im Grundelement 2 ausgebildet ist. Die bogenförmige Erhebung 11 wird bei einem Krafteintrag entlang der Längserstreckung des Grundelements 2 flacher, weshalb die Gesamtlänge des Befestigungselements 1 im festgelegten Zustand zusätzlich durch die Dehnungstrecke beeinflussbar ist. Somit kann neben der Auswahl einer der Vorspannpositionen 8a, 8b, die im Grundelement 2 abschnittsweise in den Arretiermittelabschnitten 15a-d ausgebildet sind, zusätzlich die Gesamtlänge des Befestigungselements 1 im Festspannzustand 101 durch die Dehnungsstrecke angepasst werden, wodurch die stufenförmige Längserstreckung des Befestigungselements 1, die aus den unterschiedlichen Vorspannpositionen 8a, 8b resultiert, stufenlos an den Umfang der Rohreinheit 100 angepasst werden kann.

Weiterhin geht aus der Längsschnittansicht hervor, dass das Grundelement 2 im Bereich der bogenförmigen Erhebung 11 eine reduzierte Dicke von im Wesentlichen 0,8mm umfasst, wobei außerhalb der bogenförmigen Erhebung 11 das Grundelement 2 eine Dicke von im Wesentlichen 1,3mm umfasst. Ferner umfasst das Grundelement unmittelbar benachbart zur bogenförmigen Erhebung 11 ein Übergangsbereich mit einer reduzierten Materialdicke von im Wesentlichen 0,9mm, um somit eine optimale Vorspannung im Grundelement zu realisieren. Vorteilhaft kann beim Festspannen des Befestigungselements 1 an die Umfangsfläche der Rohreinheit 100 die für den Reibschluss erforderliche Kraft durch die Rückstellkraft der bogenförmigen Erhebung 11 erzeugt werden, die von der Steifigkeit des gewählten Materials und der Geometrie der bogenförmigen Erhebung 11 sowie des Übergangsbereichs beeinflussbar ist.

Die Fig. 2b zeigt den aus der Fig. 2a bekannten Bereich in einer Draufsicht. Zum einen geht hervor, dass die Arretiernase 14 bezüglich der Breitenerstreckung des Grundelements 2 mittig innerhalb der Ausnehmung 12 angeordnet ist und zudem bezüglich der Breitenerstreckung nur in einem Teilbereich der Ausnehmung 12 ausgebildet ist. Ferner zeigt die Draufsicht, dass die bogenförmige Erhebung 11 in der gesamten Breitenerstreckung des Grundelements 2 ausgebildet ist.

In der Fig. 3a ist der erste Arretiermittelabschnitt 15a in Alleindarstellung in einer Seitenansicht abgebildet. Der erste Arretiermittelabschnitt 15a ist durch eine Vielzahl von im Wesentlichen zägezahnförmigen Erhebungen in der Oberseite 21 des Grundelements 2 ausgebildet, wobei durch jede Erhebung eine der wenigstens zwei Festspannpositionen 8a-b ausgebildet wird. Der erste Arretiermittelabschnitt 15a erstreckt sich über eine Länge von 5 mm bis 20mm, insbesondere 10mm bis 12mm.

Die Fig. 3b zeigt einen Ausschnitt der Fig. 3a im vergrößerten Maßstab. Somit wird ersichtlich, dass die zägezahnförmigen Erhebungen einen flachen Dachabschnitt 28 umfassen, der parallel zur Oberseite 21 des Grundelements 2 ausgebildet ist. Der Dachabschnitt 28 verbindet die im Wesentlichen senkrecht zur Oberseite 21 ausgerichtete Krafteintragsflächen 29 mit einem Steigungsabschnitt 30, wobei wiederum zwischen dem Steigungsabschnitt 30 und der Krafteintragsfläche 29 ein im Wesentlichen parallel zur Oberseite 21 ausgerichteter Bodenabschnitt 32 vorgesehen ist. Die Abfolge von Steigungsabschnitt 30, Bodenabschnitt 32, Krafteintragsfläche 29 und Dachabschnitt 28 wiederholen sich im Bereich des ersten Arretiermittelabschnitt 15a entlang der Erstreckungsachse E zyklisch, wobei eine entsprechende Folge bevorzugt eine Längserstreckung von etwa1mm bis 2mm aufweist.

Die Fig. 4 zeigt das Grundelement 2 im Bereich des freien Endes 13 im vergrößerten Maßstab in einer Längsschnittansicht. Aus der Darstellung geht hervor, dass der Griffabschnitt 20 in der Oberseite 21 und in der Unterseite 22 des Grundelements 2 durch eine Vielzahl von beidseitig ausgebildeten Griffrillen 23 ausgebildet ist. Ferner zeigt die Darstellung die endseitig im Grundelement 2 ausgebildete Öse 19, mittels der ein Werkzeug zum Einbringen einer Zugkraft in das Grundelement 2 einbringbar ist, um somit den Federabschnitt 10 entlang der Dehnungsstrecke reversibel zu verformen und den Festspannzustand 101 zu realisieren.

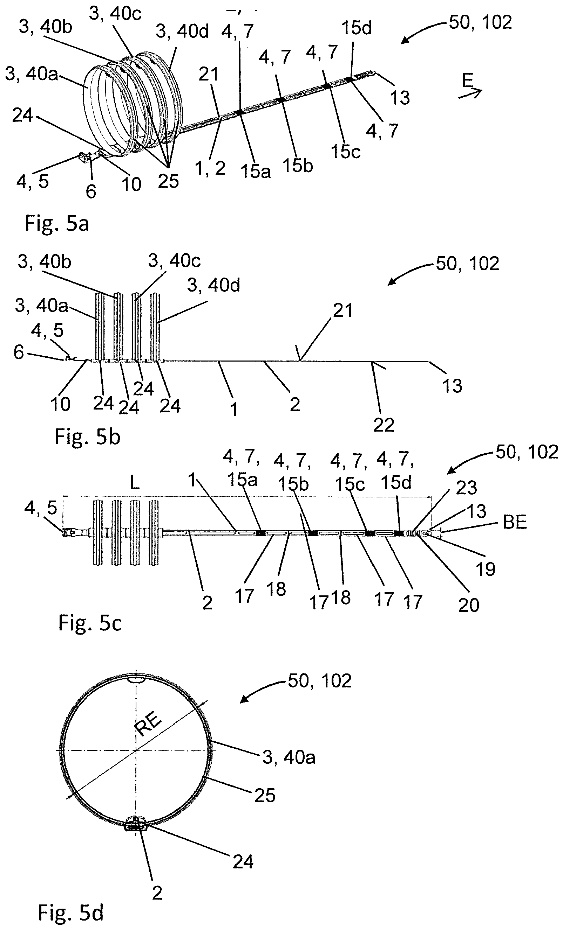

In der Fig. 5a ist ein erfindungsgemäßes manschettenartiges Zentrierelement 50 zum zentrischen Ausrichten einer Rohreinheit 100 beispielsweise eines Abgassystems einer Heizungsanlage in einem, insbesondere vertikal verlaufenden Schacht gemäß einer ersten bevorzugten Ausführungsform in einem Grundzustand 102 dargestellt.

Das Zentrierelement 50 umfasst ein erfindungsgemäßes Befestigungselement 1 zum umfangsseitigen Festspannen an eine Rohreinheit 100 beispielsweise eines Abgassystems einer Heizungsanlage sowie Zentriermittel 3, die durch wenigstens ein separates Bauteil ausgebildet sind.

Das Befestigungselement 1 umfasst ein bandförmiges Grundelement 2, das in dem dargestellten Grundzustand 102 entlang einer Erstreckungsachse E ausgebildet ist.

Das Grundelement 2 umfasst Festspannmittel 4, die eine an einem ersten Ende 6 des Grundelements 2 angeordnete Arretiereinheit 5 aufweist. Des Weiteren umfasst das Grundelement 2 Arretiermittel 7, die zum Zusammenwirken mit der Arretiereinheit 5 ausgebildet sind, um das Befestigungselement 1 umfangsseitig zu der Rohreinheit 100 anzuordnen.

Bei der dargestellten Ausführungsform umfassen die Arretiermittel 7 einen ersten Arretiermittelabschnitt 15a, einen zweiten Arretiermittelabschnitt 15b, einem dritten Arretiermittelabschnitt 15c sowie einen vierten Arretiermittelabschnitt 15d, die auf der Oberseite 21 des Grundelements 2 zwischen der Arretiereinheit 5 und einem freien Ende 13 des Grundelements 2 ausgebildet sind. Sämtliche Arretiermittelabschnitte 15a-d weisen eine nicht im Detail dargestellte Vielzahl von Festspannpositionen 8a-b auf, um somit das Grundelement 2 in einem Festspannzustand 101 an unterschiedlich dicken Rohreinheiten 100 zu fixieren.

Für ein kraftschlüssiges Anliegen des Befestigungselements 1 um die Rohreinheit 100 umfasst das Grundelement 2 einen Federabschnitt 10, der entlang einer Dehnungsstrecke, die im Grundzustand 102 in Richtung der Erstreckungsachse E verläuft, elastisch verformbar ist. Der als Pufferabschnitt wirkende Federabschnitt 10 ist unmittelbar benachbart zum ersten Ende 6 und somit zu der Arretiereinheit 5 angeordnet und führt zu einem kontinuierlichen Ausgleich der Längserstreckung des Grundelements 2 zwischen einer ersten Festspannposition 8a und einer zweiten Festspannposition 8b, um das kraftschlüssige Anliegen des Befestigungselements 1 um die Rohreinheit 100 zu erzielen.

Weiterhin umfasst das Befestigungselement 1 die Zentriermittel 3, um in dem Festspannzustand 101 das zentrische Ausrichten der Rohreinheit 100 innerhalb des Schachts zu ermöglichen. Vorliegend werden die Zentriermittel 3 durch vier als separates Bauteil ausgebildete Federringe 40a-d ausgebildet. Die Federringe 40a-d umfassen jeweils ein Schlittenelement 24 sowie einen Ringabschnitt 25. Der Ringabschnitt 25 besteht aus einem Kunststoffmaterial, das für die Ausrichtung der Rohreinheit 100 im Festspannzustand 101 bezüglich der Radialrichtung der Ringabschnitte 25 flexibel ist und somit in Wirkverbindung zu unterschiedlich breit ausgebildeten Schächten für eine mechanische Ausrichtung und Zentrierung der Rohreinheit 100 innerhalb des Schachts gebracht werden kann.

In der Fig. 5b ist das Zentrierelement 50 im Grundzustand 102 in einer Seitenansicht dargestellt.

Die vier Federringe 40a-d sind jeweils über ein separates Schlittenelement 24 mit dem Grundelement 2 mechanisch verbunden, können aber bei der Inbetriebnahme entlang des Grundelements 2 verschoben werden, um eine möglichst gleichmäßige Ausrichtung der vier Federringe 40a-d innerhalb des Schachts zu ermöglichen.

Das Grundelement 2 umfasst ferner eine Oberseite 21, die gegenüberliegend zu einer Unterseite 22 des Grundelements 2 ausgebildet ist.

In der Fig. 5c ist das bereits bekannte Befestigungselement 1 im Grundzustand 102 in einer Draufsicht dargestellt.

Das Grundelement 2 erstreckt sich in der vorliegenden Ausführungsform über eine Gesamtlänge L von 40cm, wobei die Breitenerstreckung BE des Grundelements 2 bevorzugt in einem Bereich zwischen 9 bis 11mm liegt, insbesondere 9,4mm beträgt. Ferner geht aus der Sicht auf die Oberseite 21 des Grundelements 2 hervor, dass zwischen den vier Arretiermittelabschnitten 15a-d mittig zur Breitenerstreckung des Grundelements 2 eine schlitzförmige Materialaussparung 17 im Grundelement 2 vorgesehen ist.

Vorteilhaft führt die schlitzförmige Materialaussparung 17 in einem später noch näher erläuterten Festspannzustand 101 zu einer verbesserten Haftreibung zwischen dem Grundelement 2 und der Rohreinheit 100, da die entlang der Erstreckungsachse E benachbart zu der schlitzförmige Materialaussparung 17 ausgebildeten zwei Längsstege 26, 27 sich verkeilen und somit einem Abrutschen des Befestigungselements 1 in Längsrichtung der Rohreinheit 100 durch die verbesserte Haftreibung entgegenwirken.

Weiterhin umfasst das Grundelement 2 Solltrennstellen 18, die durch eine Verjüngung der Breitenerstreckung 2 des Grundelements 2 ausgebildet sind.

Ausgehend vom freien Ende 13 des Grundelements 2 umfasst das Grundelement 2 ferner eine Öse 19, um ein Werkzeug in Eingriff mit dem Grundelement 2 zu bringen.

Um auch eine werkzeuglose Montage zu ermöglichen, umfasst das Grundelement 2 zudem einen Griffabschnitt 20, der durch eine bereichsweise Ausbildung von Griffrillen 23 auf der Oberseite 21 und der Unterseite 22 des Grundelements 2 ausgebildet wird.

Die Fig. 5d zeigt das bereits bekannte Zentrierelement 50 im Grundzustand 102 in einer Ansicht von vorne.

Der Federring 40a umfasst einen kreisförmigen Ringabschnitt 25 aus einem Kunststoffmaterial, der bezüglich seiner Radialerstreckung flexibel ausgebildet ist. In der dargestellten Ausführungsform beträgt die Radialerstreckung RE des Ringabschnitts 25 einen Wert zwischen 80mm bis 120mm, bevorzugt 90mm bis 110mm, weiter bevorzugt im Wesentlichen 108mm.

Der Ringabschnitt 25 ist über das Schlittenelement 24 mit dem Grundelement 2 mechanisch gekoppelt, um somit den Federring 40a relativ zur Rohreinheit 100 im später noch näher erläuterten Festspannzustand 101 auszurichten.

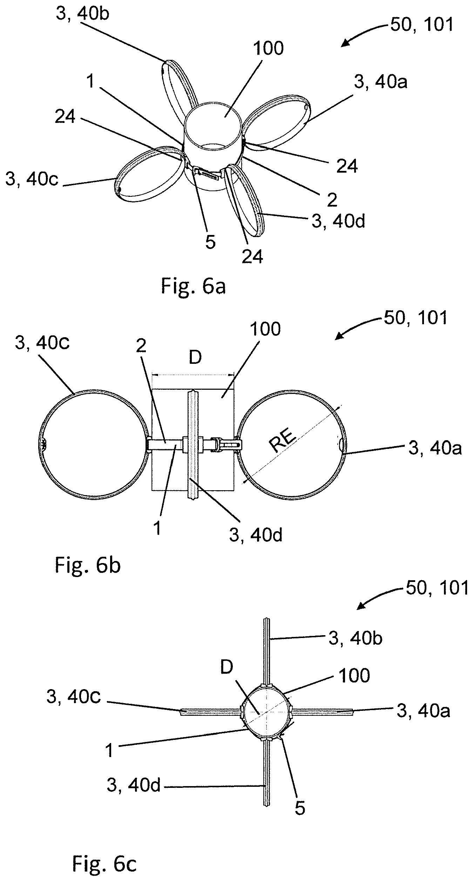

Die Fig.6a zeigt nun das bekannte manschettenartige Zentrierelement 50 in dem bereits erwähnten Festspannzustand 101 in einer perspektivischen Ansicht. In dem Festspannzustand 101 ist das Befestigungselement 1 umfangsseitig zu einer Rohreinheit 100 so angeordnet, dass die Zentriermittel 3 bezüglich der Rohreinheit 100 radial abragend ausgerichtet sind. Die Rohreinheit 100 kann damit innerhalb eines nicht grafisch dargestellten Schachts von den Schachtinnenwänden gleichmäßig beabstandet ausgerichtet werden.

Der Schacht kann in diesem Zusammenhang eine unterschiedliche Geometrie aufweisen. Neben einer runden Ausgestaltung mit einem inneren Durchmesser oder Nennweite kann der Schacht auch eine ovale, rechteckförmige oder quadratische Grundfläche aufweisen. Weiterhin ist die vorliegende Erfindung auch im Zusammenhang von Schächten einsetzbar, die insgesamt oder bereichsweise winklig zur Vertikalen ausgerichtet sind, wobei dann auch eine im Wesentlichen zentrische und/oder zumindest von den Innenwänden im Wesentlichen gleichmäßig beabstandete Ausrichtung der Rohreinheit 100 , insbesondere bezüglich gegenüberliegenden Innenwänden des Schachts, erfolgen soll.

Die Unterseite 22 des bandförmigen Grundelements 2 liegt in dem Festspannzustand 101 an der Mantelfläche der Rohreinheit100 kraftschlüssig an. In Abhängigkeit vom Durchmesser der Rohreinheit 100 wird die einends am Grundelement 2 angeordnete Arretiereinheit 5 mit einem der vier Arretiermittelabschnitte 15a-d in Wirkverbindung gebracht, um die Arretiereinheit 5 in einer der wenigstens zwei Festspannpositionen 8a, 8b festzulegen.

Ferner geht aus der Darstellung hervor, dass die Zentriermittel 3, die durch die vier Federringe 40a-d ausgebildet sind, bevorzugt umfangsseitig gleichmäßig verteilt zur Rohreinheit 100 angeordnet werden. Hierfür kann das Schlittenelement 24, das das Grundelement 2 umschließt, entlang des Grundelements 2 verfahren werden.

Beim Festspannen des Befestigungselements 1 an die Rohreinheit 100 kann mittels eines Werkzeugs, das über die am freien Ende 13 des Grundelements 2 ausgebildete Öse 19 in Eingriff mit dem Grundelement 2 bringbar ist, eine Kraft in das Grundelement 2 eingebracht werden, um die Arretiereinheit 5 in einer der Festspannpositionen 8a, 8b festzulegen. Zusätzlich führt die Kraftbeaufschlagung zu einer Dehnung des Federabschnitts 10 entlang der Dehnungsstrecke, um somit das kraftschlüssige Anliegen des Befestigungselements 1 um die Rohreinheit 100 zu realisieren und die stufenförmige Längserstreckung des Befestigungselements 1, die durch die wenigsten zwei festen Festspannpositionen 8a, 8b ausgebildet werden, auszugleichen. Ferner führt das kraftschlüssige Anliegen des Grundelements 2 an der Rohreinheit 100 dazu, dass die Schlittenelemente 24 an den zuvor gewählten Umfangspositionen der Rohreinheit 100 fixiert werden.

Die Fig. 6b zeigt das bekannte Zentrierelement 50 im Festspannzustand 101 in einer Seitenansicht. Es wird deutlich erkennbar, dass der erste Federring 40a gegenüberliegend zum dritten Federring 40c angeordnet ist. Ferner ragt der vierte Federring 40d aus der Zeichenebene heraus. Aus dieser Darstellung wird auch ersichtlich, dass das erfindungsgemäße Befestigungselement 1 an einer Rohreinheit 100 mit einem Durchmesser D von 8cm angeordnet ist.

Da die Ringabschnitte 25 aus einem flexiblen Kunststoffmaterial bestehen, kann die Rohreinheit 100 innerhalb eines Schachts mit einer inneren Quer- und/oder Längserstreckung zwischen 10cm bis 25cm eingesetzt werden. Für Schachte mit einer größeren Quer- bzw. Längserstreckung kann der bandförmige Grundkörper 2 auch mit alternativen Zentriermitteln 3 kombiniert werden, was aufgrund der Ausgestaltung als separates Bauteil technisch einfach umsetzbar ist.

Die Fig. 6c zeigt das bekannte Zentrierelement 50 im Festspannzustand 101 in einer Draufsicht.

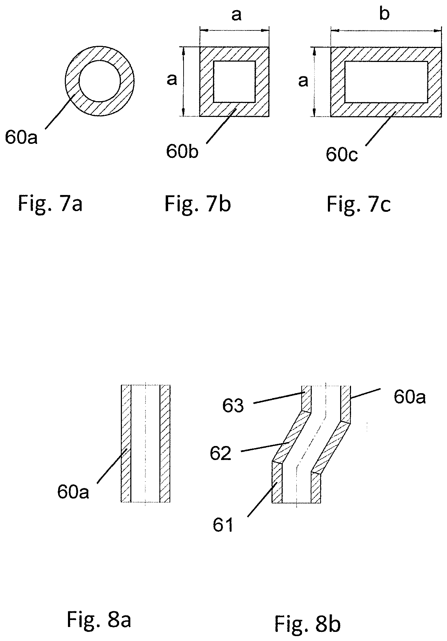

In der Fig. 7a-c ist die Querschnittansicht von unterschiedlichen Schächten 60a-c dargestellt, in denen eine nicht grafisch dargestellte Rohreinheit 100 mittels eines erfindungsgemäßen Zentrierelements 50 zentrisch angeordnet sein kann.

Neben einem Schacht 60a mit einem runden Querschnitt, wie in der Fig. 7a dargestellt, kann der Schacht 60b auch eine quadratische Grundfläche gemäß der Fig. 7b aufweisen.

Weiterhin ist es vorgesehen, dass das Zentrierelement 50 auch zum zentrischen Ausrichten einer Rohreinheit 100 in einem Schacht 60c mit rechteckförmiger Grundfläche gemäß der Fig. 7c zusammenwirken kann, wobei sich das zentrische Ausrichten dann auf die beiden gegenüberliegenden Innenwände bezieht, zu der die Rohreinheit 100 im Wesentlichen mittig anordenbar sein soll.

Die Fig. 8a zeigt einen Längsschnitt des Schachts 60a mit rundem Querschnitt, wobei der Schacht 60a vertikal ausgerichtet ist und einen geradlinigen Verlauf umfasst.

In der Fig. 8b hat der runde Schacht 60a einen vertikal versetzten Verlauf, wobei der Schacht 60a einen mittleren Bereich 62 umfasst, der einen unteren vertikal ausgerichteten Abschnitt 61 mit einem oberen vertikal ausgerichteten Abschnitt 63 verbindet. Vorteilhaft kann durch die Verwendung von einer Vielzahl von Zentrierelementen 50 somit mehrere Rohreinheiten 100, die an die Längserstreckung der Abschnitte 61-63 angepasst sind, innerhalb dem unteren, mittleren und oberen Abschnitt 61-63 zentrisch ausgerichtet werden.

### Bezugszeichenliste

- 1: Befestigungselement
- 2: bandförmiges Grundelement
- 3: Zentriermittel
- 4: Festspannmittel
- 5: Arretiereinheit
- 6: erstes Ende des Grundelements
- 7: Arretiermittel
- 8a, 8b: Festspannpositionen

- 10: Federabschnitt
- 11: bogenförmige Erhebung
- 12: Ausnehmung
- 13: freies Ende
- 14: Arretiernase
- 15a: ersten Arretiermittelabschnitt
- 15b: zweiter Arretiermittelabschnitt
- 15c: dritter Arretiermittelabschnitt
- 15d: vierter Arretiermittelabschnitt
- 16: Vielzahl von sägezahnförmigen Raststufen
- 17: schlitzförmige Materialaussparung
- 18: Solltrennstelle
- 19: Öse
- 20: Griffabschnitt
- 21: Oberseite
- 22: Unterseite
- 23: Vielzahl von Griffrillen
- 24: Schlittenelement
- 25: Ringabschnitt
- 26: randseitiger Längsstege
- 27: randseitiger Längsstege
- 28: Dachabschnitt
- 29: Krafteintragsfläche
- 30: Steigungsabschnitt
- 31: Angriffsfläche
- 32: Bodenabschnitt

- 40a: erster Federring
- 40b: zweiter Federring
- 40c: dritter Federring
- 40d: vierter Federring

- 50: Zentrierelement
- 60a-c: Schacht, jeweils mit unterschiedlichem Querschnitt
- 61: unterer Schachtabschnitt
- 62: mittlerer Schachtabschnitt
- 63: oberer Schachtabschnitt

- 100: Rohreinheit
- 101: Festspannzustand
- 102: Grundzustand

- E: Erstreckungsachse

## Patentansprüche

1. Manschettenartiges Befestigungselement (1) zum umfangsseitigen Festspannen an einer Rohreinheit (100) insbesondere eines Abgassystems einer Heizungsanlage, umfassend
- ein in einem Grundzustand (102) entlang einer Erstreckungsachse (E) ausgebildetes bandförmiges Grundelement (2) zum umfangsseitigen Anliegen an einer Mantelfläche der Rohreinheit (100) in einem Festspannzustand (101), wobei das Grundelement (2) insbesondere zur Aufnahme von als separate Bauteile ausgebildeten Zentriermitteln (3) ausgebildet ist, die im Festspannzustand (101) radial abragend zur Rohreinheit (100) ausrichtbar sind, um die Rohreinheit (100) innerhalb eines Schachts (60a-c) zentrisch anzuordnen,
- Festspannmittel (4) mit einer Arretiereinheit (5), die an einem ersten Ende (6) des Grundelements (2) angeordnet ist und Arretiermitteln (7), die wenigstens zwei auf dem Grundelement (2) entlang der Erstreckungsachse (E) zueinander benachbart ausgebildete Festspannpositionen (8a, 8b) ausbilden, wobei die Festspannmittel (4) so ausgebildet sind, dass die Arretiereinheit (5) zum umfangsseitigen Festspannen des Grundelements (2) an der Mantelfläche der Rohreinheit (100) in einer der wenigstens zwei Festspannpositionen (8a, 8b) festlegbar ist,
**dadurch gekennzeichnet,**
**dass** das Grundelement (2) zwischen der Arretiereinheit (5) und den Arretiermitteln (7) einen entlang einer Dehnungsstrecke elastisch verformbaren Federabschnitt (10) zum kraftschlüssigen Festspannen des Grundelements (2) um die Rohreinheit (100) umfasst.

2. Befestigungselement nach Anspruch 1,
**dadurch gekennzeichnet,**
**dass** der Federabschnitt (10) durch eine bogenförmige Erhebung (11) des Grundelements (2) ausgebildet ist.

3. Befestigungselement nach Anspruch 1 oder 2,
**dadurch gekennzeichnet,**
**dass** das Grundelement (2) zusammen mit dem Federabschnitt (10) und den Festspannmitteln (4) monolithisch und/oder als Kunststoffspritzgussteil aus einem Kunststoffmaterial ausgebildet ist, wobei das Kunststoffmaterial insbesondere gegenüber in Längs- oder Umfangsrichtung wirkende Zugkräfte steife und/oder unflexible Materialeigenschaften aufweist.

4. Befestigungselement nach einem der vorhergehenden Ansprüche, **dadurch gekennzeichnet,**
**dass** die Arretiereinheit (5) eine Ausnehmung (12) zum Einführen eines dem ersten Ende (6) gegenüberliegenden freien Endes (13) des Grundelements (2) sowie eine Arretiernase (14) umfasst, derart, dass beim Einführen des freien Endes (13) in die Ausnehmung (12) die Arretiernase (14) in einer der wenigstens zwei Festspannpositionen (8a, 8b) festlegbar ist.

5. Befestigungselement nach Anspruch 4,
**dadurch gekennzeichnet,**
**dass** die Arretiernase (14) eine Angriffsfläche (31) zum Lösen der Festspannpositionen (8a, 8b) durch einen, insbesondere manuellen, Krafteintrag umfasst.

6. Befestigungselement nach einem der vorhergehenden Ansprüche, **dadurch gekennzeichnet,**
**dass** die Arretiermittel (7) im Grundelement (2) abschnittsweise ausgebildet sind und/oder dass die Arretiermittel (7) in einem ersten Arretiermittelabschnitt (15a) und/oder einem zweiten Arretiermittelabschnitt (15b) und/oder einem dritten Arretiermittelabschnitt (15c) und/oder wenigstens einem vierten Arretiermittelabschnitt (15d) ausgebildet sind, die insbesondere im Grundelement (2) entlang der Erstreckungsachse (E) zueinander beabstandet ausgebildet sind.

7. Befestigungselement nach einem der vorhergehenden Ansprüche, **dadurch gekennzeichnet,**
**dass** die Arretiermittel (7) eine Vielzahl von im Wesentlichen sägezahnförmigen Raststufen (16) zum Ausbilden der wenigstens zwei Festspannpositionen (8a, 8b) umfasst.

8. Befestigungselement nach einem der vorhergehenden Ansprüche, **dadurch gekennzeichnet,**
**dass** das Grundelement (2) wenigstens einen bezüglich der Breitenerstreckung des Grundelements (2) mittig angeordnete schlitzförmige Materialaussparung (17) umfasst, die abschnittsweise entlang der Erstreckungsachse (E), insbesondere bezüglich der Erstreckungsachse (E) benachbart zu einem oder zwei der wenigstens vier Arretiermittelabschnitte (15a-d), ausgebildet ist.

9. Befestigungselement nach einem der vorhergehenden Ansprüche, **dadurch gekennzeichnet,**
**dass** das Grundelement (2) bezüglich seiner Breitenerstreckung eine Verjüngung zum Ausbilden einer Solltrennstelle (18) umfasst.

10. Befestigungselement nach einem der vorhergehenden Ansprüche, **dadurch gekennzeichnet,**
**dass** das Grundelement (2) eine Öse (19) zum Eingriff eines Werkzeugs umfasst, derart, dass beim Herstellen des Festspannzustands (101) der Federabschnitt (10) entlang der Dehnungsstrecke mittelbar über das Werkzeug von einer Bedienperson kraftbeaufschlagbar ist.

11. Befestigungselement nach einem der vorhergehenden Ansprüche, **dadurch gekennzeichnet,**
**dass** das Grundelement (2) bereichsweise einen Griffabschnitt (20) umfasst.

12. Befestigungselement nach einem der Ansprüche 7 bis 11,
**dadurch gekennzeichnet,**
**dass** das Grundelement (2) eine im Festspannzustand (101) nach radial außen ausgerichtete Oberseite (21) und eine der Oberseite (21) gegenüberliegende, im Festspannzustand (101) an der Mantelfläche der Rohreinheit (100) anliegende Unterseite (22) umfasst, wobei die Oberseite (21) die Vielzahl der sägezahnförmigen Raststufen (16) umfasst und/oder dass der Griffabschnitt (20) eine auf der Oberseite (21) und der Unterseite (22) ausgebildete Vielzahl von Griffrillen (23) umfasst.

13. Zentrierelement (50) zum zentrischen Ausrichten einer Rohreinheit (100) insbesondere eines Abgassystems einer Heizungsanlage in einem, insbesondere vertikal verlaufenden und/oder bereichsweise vertikal versetzten Schacht (60a-c), welches neben einem Befestigungselement (1), das nach einem der Ansprüche 1 bis 12 ausgebildet ist, Zentriermittel (3), die durch wenigstens ein separates Bauteil ausgebildet sind, umfasst, um die Rohreinheit (100) in dem festgelegten Zustand des Befestigungselements (1) innerhalb des Schachts (60a-c) zentrisch auszurichten.

## Claims

1. A collar-like fastening element (1) for being tightened around the circumference of a pipe unit (100), in particular of an exhaust system of a heating installation, said fastening element (1) comprising
- a strip-shaped base element (2) which is realized along an extension axis (E) in an initial state (102) and which serves to contact a circumferential surface of the pipe unit (100) in a tightening state (101), the base element (2) being realized, in particular, for receiving centering elements (3) which are realized as separate components and which can be aligned in such a manner that they protrude radially with respect to the pipe unit (100) in the tightening state (101) in order to dispose the pipe unit (100) centrically within a shaft (60a-c),
- tightening elements (4) having a locking unit (5) disposed at a first end (6) of the base element (2) and locking elements (7) realizing at least two tightening positions (8a, 8b) which are adjacent to each other on the base element (2) along the extension axis (E), the tightening elements (4) being realized in such a manner that the locking unit (5) can be fixed in one of the at least two tightening positions (8a, 8b) in order to tighten the base element (2) around the circumferential surface of the pipe unit (100),
**characterized in that**
the base element (2) comprises a spring section (10) between the locking unit (5) and the locking elements (7), said spring section (10) being elastically deformable along a stretching path and serving to tighten the base element (2) around the pipe unit (100) in a force-locking manner.

2. The fastening element according to claim 1,
**characterized in that**
the spring section (10) is realized by an arc-shaped elevation (11) of the base element (2).

3. The fastening element according to claim 1 or 2,
**characterized in that**
the base element (2), together with the spring section (10) and the tightening elements (4), is realized monolithically and/or as a plastic injection molded part of a plastic material, the plastic material having stiff and/or inflexible material properties in particular with respect to tensile forces acting in the longitudinal or circumferential direction.

4. The fastening element according to any one of the preceding claims, **characterized in that**
the locking unit (5) comprises a recess (12) for the insertion of a free end (13) of the base element (2) opposite the first end (6) and a locking lug (14) in such a manner that the locking lug (14) can be fixed in one of the at least two tightening positions (8a, 8b) when the free end (13) is inserted into the recess (12).

5. The fastening element according to claim 4,
**characterized in that**
the locking lug (14) comprises a manipulation surface (31) for releasing the tightening positions (8a, 8b) by means of a force input, in particular a manual force input.

6. The fastening element according to any one of the preceding claims, **characterized in that**
the locking elements (7) are realized sectionally in the base element (2) and/or **in that** the locking elements (7) are realized in a first locking element section (15a) and/or a second locking element section (15b) and/or a third locking element section (15c) and/or at least a fourth locking element section (15d) which are realized at a distance from each other in particular in the base element (2) along the extension axis (E).

7. The fastening element according to any one of the preceding claims, **characterized in that**
the locking elements (7) comprise a plurality of essentially sawtooth-shaped latching steps (16) for realizing the at least two tightening positions (8a, 8b).

8. The fastening element according to any one of the preceding claims, **characterized in that**
the base element (2) comprises at least one slit-shaped material clearance (17) which is disposed centrally with respect to the width dimension of the base element (2) and which is realized sectionally along the extension axis (E), in particular adjacent to one or two of the at least four locking element sections (15a-d) with regard to the extension axis (E).

9. The fastening element according to any one of the preceding claims, **characterized in that**
the base element (2) comprises a tapering with regard to its width dimension to realize a predetermined separation point (18).

10. The fastening element according to any one of the preceding claims, **characterized in that**
the base element (2) comprises an eyelet (19) for the engagement of a tool in such a manner that force can be applied to the spring section (10) by an operator indirectly via the tool along the stretching path while the tightening state (101) is established.

11. The fastening element according to any one of the preceding claims, **characterized in that**
part of the base element (2) comprises a grip section (20).

12. The fastening element according to any one of claims 7 to 11, **characterized in that**
the base element (2) comprises an upper side (21) oriented radially outward in the tightening state (101) and a bottom side (22) opposite the upper side (21) and contacting the circumferential surface of the pipe unit (100) in the tightening state (101), the upper side (21) comprising the plurality of the sawtooth-shaped latching steps (16), and/or **in that** the grip section (20) comprises a plurality of grip grooves (23) realized on the upper side (21) and the bottom side (22).

13. A centering device (50) for centrically aligning a pipe unit (100), in particular of an exhaust system of a heating installation in a shaft (60a-c) which in particular runs vertically and/or is vertically offset in some areas, said centering device (50) comprising, in addition to a fastening element (1) realized according to any one of claims 1 to 12, centering elements (3) realized by at least one separate component to align the pipe unit (100) in the fixed state of the fastening element (1) centrically within the shaft (60a-c).

## Revendications

1. Élément de fixation (1) en forme de manchon pour le serrage autour de la circonférence d'une unité de tuyau (100), notamment d'un système d'échappement d'une installation de chauffage, ledit élément de fixation (1) comprenant
- un élément de base (2) en forme de bande qui est réalisé le long d'un axe d'extension (E) dans un état initial (102) et qui sert à venir en contact avec une surface circonférentielle de l'unité de tuyau (100) dans un état de serrage (101), l'élément de base (2) étant réalisé notamment pour recevoir des moyens de centrage (3) qui sont réalisés comme composants séparés et qui peuvent être orientés de manière à faire radialement saillie par rapport à l'unité de tuyau (100) dans l'état de serrage (101) pour disposer l'unité de tuyau (100) de manière centrale dans un puits (60a-c),
- des moyens de serrage (4) ayant une unité de blocage (5) disposée à une première extrémité (6) de l'élément de base (2) et des éléments de blocage (7) qui réalisent au moins deux positions de serrage (8a, 8b) adjacentes l'une par rapport à l'autre sur l'élément de base (2) le long de l'axe d'extension (E), les moyens de serrage (4) étant réalisés de manière que l'unité de blocage (5) peut être fixée dans une des au moins deux positions de serrage (8a, 8b) pour le serrage de l'élément de base (2) autour de la surface circonférentielle de l'unité de tuyau (100),
**caractérisé en ce que**
l'élément de base (2) comprend une partie de ressort (10) entre l'unité de blocage (5) et les moyens de blocage (7), ladite partie de ressort (10) étant élastiquement déformable le long d'un trajet d'extension et servant à serrer l'élément de base (2) autour de l'unité de tuyau (100) de manière à être solidaire.

2. Élément de fixation selon la revendication 1,
**caractérisé en ce que**
la partie de ressort (10) est réalisée par une élévation (11) en forme d'arc de l'élément de base (2).

3. Élément de fixation selon la revendication 1 ou 2,
**caractérisé en ce que**
l'élément de base (2), conjointement avec la partie de ressort (10) et les moyens de serrage (4), est réalisé monolithiquement et/ou comme pièce de plastique moulée par injection d'une matière plastique, la matière plastique ayant des propriétés de matériau rigides et/ou inflexibles notamment à l'égard de forces de traction agissant dans la direction longitudinale ou circonférentielle.

4. Élément de fixation selon l'une quelconque des revendications précédentes,
**caractérisé en ce que**
l'unité de blocage (5) comprend un évidement (12) pour l'insertion d'une extrémité libre (13) de l'élément de base (2) opposée à la première extrémité (6) et un taquet de blocage (14) de manière que le taquet de blocage (14) peut être fixé dans une des au moins deux positions de serrage (8a, 8b) lors que l'extrémité libre (13) est insérée dans l'évidement (12).

5. Élément de fixation selon la revendication 4,
**caractérisé en ce que**
le taquet de blocage (14) comprend une surface de manipulation (31) pour libérer les positions de serrage (8a, 8b) au moyen d'une introduction de force, notamment une introduction de force manuelle.

6. Élément de fixation selon l'une quelconque des revendications précédentes,
**caractérisé en ce que**
les moyens de blocage (7) sont réalisés par sections dans l'élément de base (2) et/ou **en ce que** les moyens de blocage (7) sont réalisés dans une première partie (15a) de moyens de blocage et/ou une deuxième partie (15b) de moyens de blocage et/ou une troisième partie (15c) de moyens de blocage et/ou au moins une quatrième partie (15d) de moyens de blocage qui sont réalisées de manière espacée les unes des autres notamment dans l'élément de base (2) le long de l'axe d'extension (E).

7. Élément de fixation selon l'une quelconque des revendications précédentes,
**caractérisé en ce que**
les moyens de blocage (7) comprennent une pluralité de crans (16) qui sont essentiellement en forme de dents de scie pour réaliser les au moins deux positions de serrage (8a, 8b).

8. Élément de fixation selon l'une quelconque des revendications précédentes,
**caractérisé en ce que**
l'élément de base (2) comprend au moins une échancrure de matériau (17) en forme de fente qui est disposée centralement par rapport à la dimension de largeur de l'élément de base (2) et qui est réalisée par sections le long de l'axe d'extension (E), notamment de manière adjacente à une ou deux des au moins quatre parties de moyens de blocage (15a-d) quant à l'axe d'extension (E).

9. Élément de fixation selon l'une quelconque des revendications précédentes,
**caractérisé en ce que**
l'élément de base (2) comprend un rétrécissement quant à sa dimension de largeur pour réaliser un point de séparation (18) prédéterminé.

10. Élément de fixation selon l'une quelconque des revendications précédentes,
**caractérisé en ce que**
l'élément de base (2) comprend un anneau (19) pour la mise en prise d'un outil de manière qu'une force peut être appliquée sur la partie de ressort (10) le long du trajet d'extension par un opérateur indirectement au moyen de l'outil lors de l'établissement de l'état de serrage (101).

11. Élément de fixation selon l'une quelconque des revendications précédentes,
**caractérisé en ce**
**qu'**une partie de l'élément de base (2) comprend une partie de préhension (20).

12. Élément de fixation selon l'une quelconque des revendications 7 à 11, **caractérisé en ce que**
l'élément de base (2) comprend un côté supérieur (21) orienté radialement vers l'extérieur dans l'état de serrage (101) et un côté inférieur (22) opposé au côté supérieur (21) et en contact avec la surface circonférentielle de l'unité de tuyau (100) dans l'état de serrage (101), le côté supérieur (21) comprenant la pluralité des crans (16) en forme de dents de scie, et/ou **en ce que** la partie de préhension (20) comprend une pluralité de rainures de préhension (23) réalisée sur le côté supérieur (21) et le côté inférieur (22).

13. Élément de centrage (50) pour l'orientation centrale d'une unité de tuyau (100), notamment d'un système d'échappement d'une installation de chauffage dans un puits (60a-c) qui notamment s'étend verticalement et/ou est décalé verticalement par endroits, ledit élément de centrage (50) comprenant, en plus d'un élément de fixation (1) réalisé selon l'une quelconque des revendications 1 à 12, des moyens de centrage (3) réalisés par au moins un composant séparé pour orienter l'unité de tuyau (100) dans l'état fixé de l'élément de fixation (1) de manière centrale dans le puits (60a-c).
